# EUROPEAN PATENT APPLICATION

(11) **EP 4 769 300 A1**
(43) Date of publication of application: **01.07.2026**
(21) Application number: 25221024.0
(22) Date of filing: 05.12.2025
(51) Int. Cl.: G06T 7/00

(54) **METHOD AND APPARATUS WITH IMAGE QUALITY ASSESSMENT**

(30) Priority: 26.12.2024 KR 20240197610
(71) Applicant: Samsung Electronics Co., Ltd., Suwon-si, Gyeonggi-do 16677 (KR)
(72) Inventor: KI, Sehwan, 16678 Suwon-si (KR); JO, Younghyun, 16678 Suwon-si (KR); KANG, Eunhee, 16678 Suwon-si (KR); SON, Jisoo, 16678 Suwon-si (KR); LEE, Hyong Euk, 16678 Suwon-si (KR)
(74) Representative: Arnold & Siedsma

(57) **Abstract**

A method and apparatus with image quality assessment are provided. A method includes generating a first modality feature based first modality data corresponding to an image pair of different levels of quality and related visual information, generating, based on the first modality data, a first relative quality value corresponding to predetermined quality indices, generating second modality data corresponding to a query that is based on the first relative quality value, retrieving, based on the first and second modality features, at least one piece of second image quality assessment data from a dataset comprising pieces of first image quality assessment data, where the second modality feature is generated based on the second modality data, generating third image quality assessment data corresponding to the image pair by applying the first and second modality features and the at least one piece of second image quality assessment data to an augmented language model.

## Description

### BACKGROUND

### 1. Field

The following description relates to a method and apparatus with image quality assessment.

### 2. Description of Related Art

Image quality assessment, IQA, is utilized in various fields such as digital photography, video streaming, medical imaging, and computer vision applications. Image quality evaluation data may play a critical role in the training and verification processes of machine learning models.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented method includes generating a first modality feature based on first modality data that corresponds to an image pair that comprise different levels of quality and have related visual information, generating, based on the first modality data, a first relative quality value corresponding to a plurality of quality indices that are predetermined, generating second modality data corresponding to a query that is generated based on the first relative quality value, retrieving, based on the first modality feature and a second modality feature, at least one piece of second image quality assessment data from a dataset including a plurality of pieces of first image quality assessment data, where the second modality feature is generated based on the second modality data, and generating third image quality assessment data corresponding to the image pair by applying the first modality feature, the second modality feature, and the at least one piece of second image quality assessment data to an augmented language model.

The generating of the first relative quality value may include, for each of a plurality of images comprised in the image pair, generating a quality value corresponding to the plurality of quality indices of a corresponding image, and generating the first relative quality value based on the quality values.

The generating of the first relative quality value may include generating a first quality feature of a corresponding image for each of a plurality of images comprised in the image pair, generating a second quality feature by fusing the first quality features, and generating the first relative quality value corresponding to the plurality of quality indices based on the second quality feature.

The first relative quality value may include a probability value indicating a respective probability, for each image of the image pair, that a corresponding image has a greatest quality for a same quality index, among the quality indexes, among all images of the image pair.

The generating of the first relative quality value may include generating the first relative quality value using a quality assessment machine learning model that may be provided the first modality data.

The first modality feature may be generated by vectorizing the first modality data, the second modality feature may be generated by vectorizing the second modality data, and the first modality feature and the second modality feature are respectively generated into a same vector space.

The method may further include generating, based on the first image quality assessment data, first mapping information corresponding to the first modality data and second mapping information corresponding to the second modality data, where the retrieval of the at least one piece of second image quality assessment data may be performed based on the first mapping information and/or the second mapping information.

The retrieving of the at least one piece of the second image quality assessment data may include retrieving, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset.

The first mapping information may include information indexed based on another image pair corresponding to the first image quality assessment data, and the second mapping information may include information indexed based on any one or any combination of text information of the first image quality assessment data, table information, and a second relative quality value determined based on the first mapping information.

The generating of the third image quality assessment data may include generating the third image quality assessment data using the augmented language model provided the first modality feature and the second modality feature, with the use of the language model including the language model considering the at least one piece of second image quality assessment data as context information.

The generating of the third image quality assessment data further may include generating source data of the third image quality assessment data using the augmented language model provided the first modality feature, the second modality feature, and the at least one piece of second image quality assessment data, and generating the third image quality assessment data by formatting the source data into a predetermined format.

The method may further include generating dataset setting information, where the dataset may include a plurality of datasets, and the generating of the second image quality assessment data may include generating the second image quality assessment data from one dataset, from among the plurality of datasets, corresponding to the dataset setting information.

The first modality feature may be a (1-1)-th modality feature based on the first modality feature and pixel-level information obtained from a quality feature that may be generated in the generating of the first relative quality value.

The method may further include extracting text information based on the third image quality assessment data, generating a (2-1)-th modality feature based on the second modality feature and the text information, generating, based on the first modality feature and the (2-1)-th modality feature, at least one piece of second review data from a corresponding dataset that may include a plurality of pieces of first review data, and generating third review data corresponding to the third image quality assessment data using the augmented language model provided the first modality feature, the (2-1)-th modality feature that may include a feature of the extracted text information, and the at least one piece of second review data.

The method may further include generating a (2-2)-th modality feature that may include the second modality feature and review text information of the third review data, generating, based on the first modality feature and the (2-2)-th modality feature, another at least one piece of second image quality assessment data from the dataset, and generating another third image quality assessment data using the augmented language model provided the first modality feature, the (2-2)-th modality feature, and the other at least one piece of second image quality assessment data.

In one general aspect, an apparatus includes one or more processors including processing circuitry, and memory including one or more storage media storing instructions that, when executed individually or collectively by the one or more processors, cause the apparatus to generate a first modality feature based on first modality data that corresponds to an image pair that comprise different levels of quality and have related visual information, generate, based on the first modality data, a first relative quality value corresponding to a plurality of quality indices, generate second modality data corresponding to a query that is generated based on the first relative quality value, retrieve, based on the first modality feature and a second modality feature, at least one piece of second image quality assessment data from a dataset including a plurality of pieces of first image quality assessment data, where the second modality feature is generated based on the second modality data, and generate third image quality assessment data corresponding to the image pair by applying the first modality feature, the second modality feature, and the at least one piece of second image quality assessment data to an augmented language model.

For the generation of the first relative quality value, the execution of the instructions may cause the apparatus to, for each of a plurality of images comprised in the image pair, generate a quality value corresponding to the plurality of quality indices of a corresponding image, and generate the first relative quality value based on the quality values.

For the generation of the first relative quality value, the execution of the instructions may cause the apparatus to generate a first quality feature of a corresponding image for each of a plurality of images comprised in the image pair, generate a second quality feature by fusing the first quality features, and generate the first relative quality value corresponding to the plurality of quality indices based on the second quality feature.

The execution of the instructions may cause the apparatus to generate, based on the first image quality assessment data, first mapping information corresponding to the first modality data and second mapping information corresponding to the second modality data, and the retrieval of the at least one piece of second image quality assessment data may be performed based on the first mapping information and/or the second mapping information.

For the retrieving of the at least one piece of second image quality assessment data, the execution of the instructions may cause the apparatus to retrieve, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset.

In one general aspect, a processor-implemented method includes generating, as a first relative quality value, a pairwise image quality assessment (IQA) metric of a plurality of images based on plurality of quality indexes, retrieving a select image quality assessment report information from among a plurality of previous image quality assessment report information, where the retrieving is performed dependent on image information of the plurality of images, and dependent on another information that is based on prompt information derived from the first relative quality value, and generating a current image quality assessment report using an augmented language model that is input first modality information that is derived from the image information of the plurality of images, and second modality information that is dependent on the prompt information, and input the retrieved previous image quality assessment report information as context information.

Data in the plurality of previous image quality assessment report information may have been generated by the augmented language model at a previous time.

Other features and aspects will be apparent from the following detailed description, the drawings, and the claims.

Other aspects are also provided by the following set of clauses:
1. A processor-implemented method, the method comprising:
   generating a first modality data that corresponds to an image pair that comprise different levels of quality and have related visual information;
   generating, based on the first modality data, a first relative quality value corresponding to a plurality of quality indices that are predetermined;
   generating second modality data corresponding to a query that is generated based on the first relative quality value;
   retrieving, based on the first modality feature and a second modality feature, at least one piece of second image quality assessment data from a dataset comprising a plurality of pieces of first image quality assessment data, where the second modality feature is generated based on the second modality data; and
   generating third image quality assessment data corresponding to the image pair by applying the first modality feature, the second modality feature, and the at least one piece of second image quality assessment data to an augmented language model.
2. The method of clause 1, wherein the generating of the first relative quality value comprises:
   for each of a plurality of images comprised in the image pair, generating a quality value corresponding to the plurality of quality indices of a corresponding image; and
   generating the first relative quality value based on the quality values.
3. The method of clause 1, wherein the generating of the first relative quality value comprises
   generating a first quality feature of a corresponding image for each of a plurality of images comprised in the image pair;
   generating a second quality feature by fusing the first quality features; and
   generating the first relative quality value corresponding to the plurality of quality indices based on the second quality feature.
4. The method of clause 3, wherein the first relative quality value comprises a probability value indicating a respective probability, for each image of the image pair, that a corresponding image has a greatest quality for a same quality index, among the quality indexes, among all images of the image pair.
5. The method of clause 1, wherein
   the generating of the first relative quality value comprises generating the first relative quality value using a quality assessment machine learning model that is provided the first modality data.
6. The method of clause 1,
   wherein the first modality feature is generated by vectorizing the first modality data,
   wherein the second modality feature is generated by vectorizing the second modality data, and
   wherein the first modality feature and the second modality feature are respectively generated into a same vector space.
7. The method of clause 1, further comprising:
   generating, based on the first image quality assessment data, first mapping information corresponding to the first modality data and second mapping information corresponding to the second modality data,
   wherein the retrieval of the at least one piece of second image quality assessment data is performed based on the first mapping information and/or the second mapping information.
8. The method of clause 7, wherein the retrieving of the at least one piece of the second image quality assessment data comprises retrieving, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset.
9. The method of clause 7,
   wherein the first mapping information comprises information indexed based on another image pair corresponding to the first image quality assessment data, and
   wherein the second mapping information comprises information indexed based on any one or any combination of text information of the first image quality assessment data, table information, and a second relative quality value determined based on the first mapping information.
10. The method of clause 1, wherein the generating of the third image quality assessment data comprises generating the third image quality assessment data using the augmented language model provided the first modality feature and the second modality feature, with the use of the language model including the language model considering the at least one piece of second image quality assessment data as context information.
11. The method of clause 1, wherein the generating of the third image quality assessment data further comprises:
   generating source data of the third image quality assessment data using the augmented language model provided the first modality feature, the second modality feature, and the at least one piece of second image quality assessment data; and
   generating the third image quality assessment data by formatting the source data into a predetermined format.
12. The method of clause 1, further comprising:
   generating dataset setting information,
   wherein the dataset comprises a plurality of datasets, and
   wherein the generating of the second image quality assessment data comprises generating the second image quality assessment data from one dataset, from among the plurality of datasets, corresponding to the dataset setting information.
13. The method of clause 1, wherein the first modality feature is a (1-1)-th modality feature based on the first modality feature and pixel-level information obtained from a quality feature that is generated in the generating of the first relative quality value.
14. The method of clause 1, further comprising:
   extracting text information based on the third image quality assessment data;
   generating a (2-1)-th modality feature based on the second modality feature and the text information;
   generating, based on the first modality feature and the (2-1)-th modality feature, at least one piece of second review data from a corresponding dataset comprising a plurality of pieces of first review data; and
   generating third review data corresponding to the third image quality assessment data using the augmented language model provided the first modality feature, the (2-1)-th modality feature further comprising a feature of the extracted text information, and the at least one piece of second review data.
15. The method of clause 14, further comprising:
   generating a (2-2)-th modality feature comprising the second modality feature and review text information of the third review data;
   generating, based on the first modality feature and the (2-2)-th modality feature, another at least one piece of second image quality assessment data from the dataset; and
   generating another third image quality assessment data using the augmented language model provided the first modality feature, the (2-2)-th modality feature, and the other at least one piece of second image quality assessment data.
16. An apparatus, the apparatus comprising:
   one or more processors comprising processing circuitry; and
   memory comprising one or more storage media storing instructions that, when executed individually or collectively by the one or more processors, cause the apparatus to:
      generate a first modality data that corresponds to an image pair that comprise different levels of quality and have related visual information;
      generate, based on the first modality data, a first relative quality value corresponding to a plurality of quality indices;
      generate second modality data corresponding to a query that is generated based on the first relative quality value;
      retrieve, based on the first modality feature and a second modality feature, at least one piece of second image quality assessment data from a dataset comprising a plurality of pieces of first image quality assessment data, where the second modality feature is generated based on the second modality data; and
      generate third image quality assessment data corresponding to the image pair by applying the first modality feature, the second modality feature, and the at least one piece of second image quality assessment data to an augmented language model.
17. The apparatus of clause 16, wherein, for the generation of the first relative quality value, the execution of the instructions causes the apparatus to:
   for each of a plurality of images comprised in the image pair, generate a quality value corresponding to the plurality of quality indices of a corresponding image; and
   generate the first relative quality value based on the quality values.
18. The apparatus of clause 16, wherein, for the generation of the first relative quality value, the execution of the instructions causes the apparatus to:
   generate a first quality feature of a corresponding image for each of a plurality of images comprised in the image pair;
   generate a second quality feature by fusing the first quality features; and
   generate the first relative quality value corresponding to the plurality of quality indices based on the second quality feature.
19. The apparatus of clause 16,
   wherein the execution of the instructions causes the apparatus to generate, based on the first image quality assessment data, first mapping information corresponding to the first modality data and second mapping information corresponding to the second modality data, and
   wherein the retrieval of the at least one piece of second image quality assessment data is performed based on the first mapping information and/or the second mapping information.
20. The apparatus of clause 19, wherein, for the retrieving of the at least one piece of second image quality assessment data, the execution of the instructions causes the apparatus to retrieve, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset.
21. A processor-implemented method, the method comprising:
   generating, as a first relative quality value, a pairwise image quality assessment (IQA) metric of a plurality of images based on plurality of quality indexes;
   retrieving a select image quality assessment report information from among a plurality of previous image quality assessment report information, where the retrieving is performed dependent on image information of the plurality of images, and dependent on another information that is based on prompt information derived from the first relative quality value; and
   generating a current image quality assessment report using an augmented language model that is input first modality information that is derived from the image information of the plurality of images, and second modality information that is dependent on the prompt information, and input the retrieved previous image quality assessment report information as context information.
22. The method of clause 21, wherein data in the plurality of previous image quality assessment report information was generated by the augmented language model at a previous time.

### BRIEF DESCRIPTION OF THE DRAWINGS

FIG. 1 illustrates an example method of generating image quality assessment data, according to one or more embodiments.
FIG. 2 illustrates an example method of generating image quality assessment data, according to one or more embodiments.
FIG. 3A illustrates an example method of an image quality assessment model, according to one or more embodiments.
FIG. 3B illustrates an example method of an image quality assessment model, according to one or more embodiments.
FIG. 4 illustrates an example method of a multi-modal retrieval model, according to one or more embodiments.
FIG. 5 illustrates an example method of formatting image quality assessment data, according to one or more embodiments.
FIG. 6 illustrates an example method of generating image quality assessment data based on a dataset input, according to one or more embodiments.
FIG. 7 illustrates an example method of generating image quality assessment data according to a dataset input, according to one or more embodiments.
FIG. 8A illustrates an example method of generating review data, according to one or more embodiments.
FIG. 8B illustrates an example method of generating image quality assessment data based on review data, according to one or more embodiments.
FIG. 9 illustrates an example computing apparatus and computing system, according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

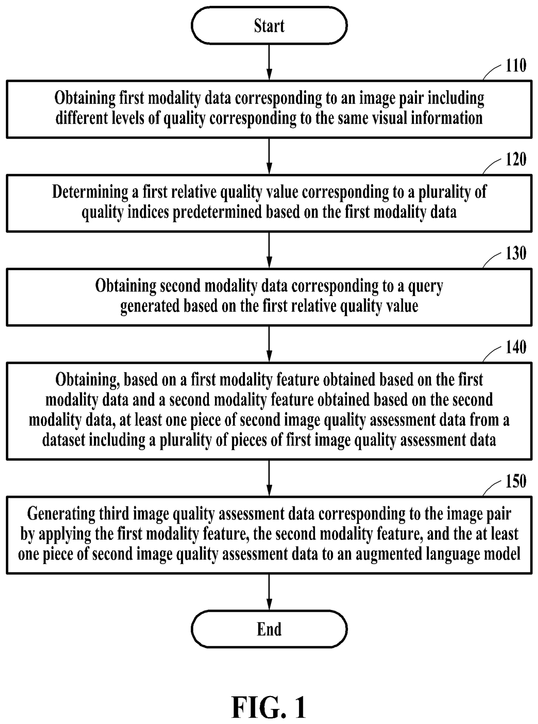

FIG. 1 illustrates an example method of generating image quality assessment data, according to one or more embodiments.

Referring to FIG. 1, an image quality assessment data generation method (hereinafter, "generation method") may include operations 110 to 150. In the following examples, operations may be performed sequentially but not necessarily. For example, the order of the operations may change and at least two of the operations may be performed in parallel.

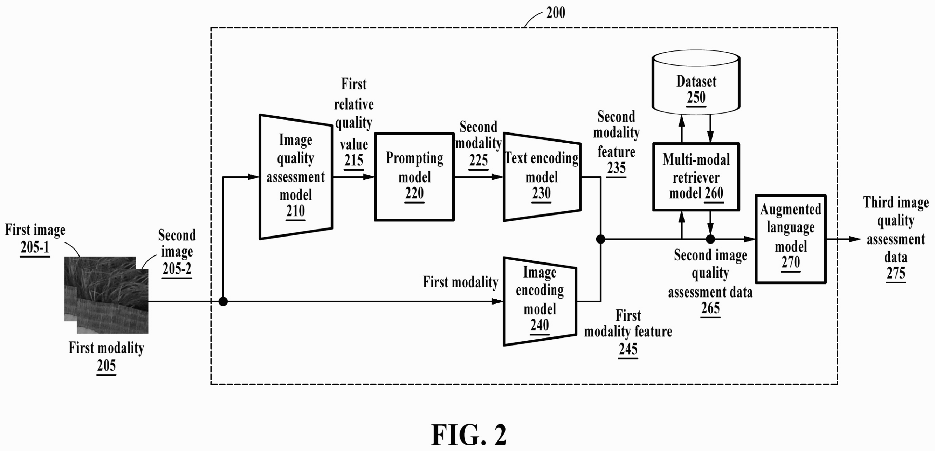

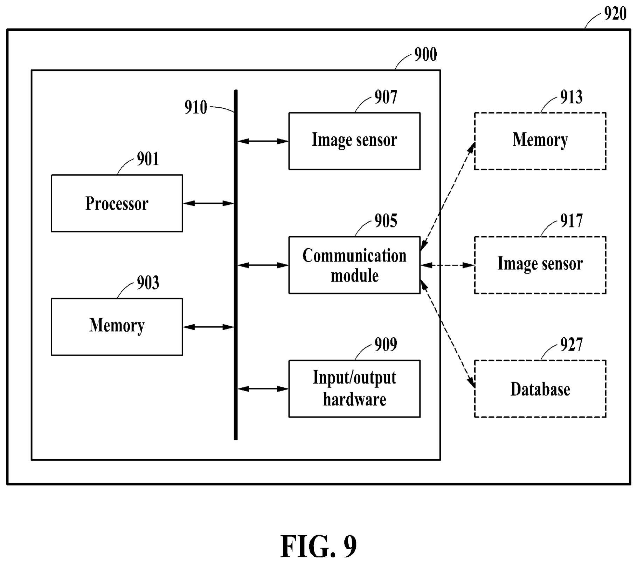

The generation method may be performed by one or more computing apparatuses and/or one or more computing systems, each respectively including one or more processors. For example, the generation method may be implemented by a single computing apparatus or by a combination of a plurality of computing apparatuses communicating with one another (e.g., using communication modules of each computing apparatus). Depending on the service to which examples are applied, the computing apparatus(es) and/or computing system(s) may be one or more servers, one or more edge devices, or in various examples, combinations of any such one or more servers and one or more edge devices that are configured to communicate with each other (e.g., using communication modules of each computing apparatus). For example, the computing apparatus(es) and/or computing system(s) may be configured to provide a software as a service (SaaS) service that generates image quality assessment data. Hereinafter, below discussions regarding configurations and operations of any computing apparatus is also applicable to multiple computing apparatus and one or more computing servers (e.g., where any may perform all or respectively less than all operations, to perform the generation method). As a non-limiting example, the computing apparatus may correspond to the computing apparatus 900 of FIG. 9, as well as any of the computing apparatuses of FIGS. 2-8B.

In operation 110, the computing apparatus may obtain first modality data corresponding to an image pair including different levels of quality corresponding to the same visual information. Visual information may include data including visual elements such as color, shape, pattern, and location transferred through an image or a video. The image pair may include images that share substantially the same visual information but differ in quality. A quality difference may be caused by various factors affecting image generation. For example, a quality difference may be caused by compression of an original or generated image (e.g., a machine learning generated or adjusted original image) and decompression of visual information from a compressed image, added noise by hardware and/or processing operations performed on such a compressed, decompressed, or original image or in the generation of an image, a resolution difference in captured and/or generated images, distortion included or added to any such images, a preprocessing algorithm applied to any image, and/or postprocessing algorithm applied to any such images, and/or a difference in hardware performance of image sensor(s). However, examples are not limited thereto.

A modality may include a data type that senses, represents, or transfers information. A modality may include an image modality, a text modality, a video modality, a numerical value modality, and the like. As an example of such sensing, one or more sensors of a computing apparatus herein may capture image data as the image modality. For example, the one or more sensors may respectively capture the image pair, or capture one or more raw images that are tuned or otherwise adjusted to generate the image pair. However, examples are not limited thereto.

The computing apparatus may receive the image pair as input and obtain the first modality data corresponding to the image pair, where the first modality data may correspond to data of the image modality. The first modality data may include preprocessed data extracted from an image pair comprising a first image and a second image, for comparison between the images. For example, the first modality data may include structured data in which the images of the image pair are aligned or normalized according to a predefined criterion for comparison between the images. In some embodiments, the first modality data may include the raw image pair itself without any preprocessing.

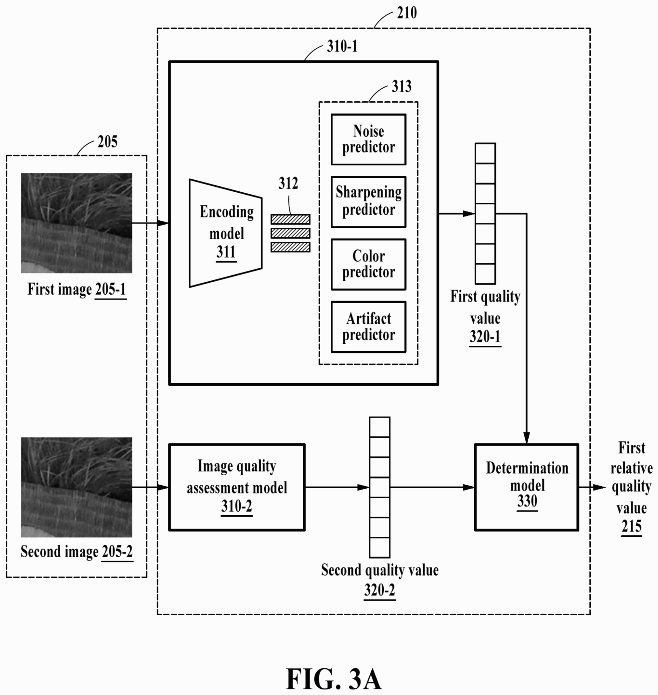

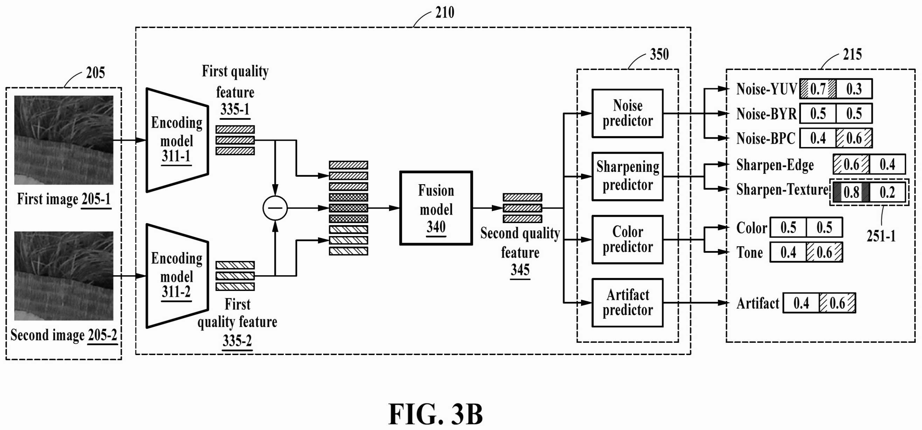

In operation 120, the computing apparatus may determine a first relative quality value corresponding to a plurality of quality indices predetermined, for example, based on the first modality data. A quality index may include criteria used to quantitatively assess visual data. For example, a quality index may include "Overall", which assesses the overall quality of an image, "Noise", which assesses quality degradation factors such as an unnecessary signal or distortion occurring in an image, "Edge", which assesses the sharpness and detail of an outline, "Texture", which assesses the detail and realism of an image surface, "Color", which assesses color accuracy and expressiveness, "Tone", which assesses the brightness, contrast, and light and dark level of an image, and "Artifact", which assesses distortion or artificial traces occurring during a processing process. As a non-limiting example, a quality index may be predetermined by a user and may vary depending on the field in which the image quality assessment results are utilized. A relative quality value may include a value determined by comparing a quality metric of an image among a plurality of images included in the image pair with a quality metric of another image. An example method of determining a first relative quality value is described in greater detail with reference to FIGS. 3A and 3B below.

The computing apparatus may determine the first relative quality value by inputting the first modality data to a learning-based quality assessment model. The quality assessment model may extract a quality feature corresponding to each image of the image pair and determine the first relative quality value corresponding to the plurality of quality indices. The quality assessment model may be a machine learning model, such as an image quality assessment (IQA) model that is trained to evaluate the quality of images. For example, a trainable parameter of an in-training quality assessment model may be updated based on a loss between the first relative quality value calculated by the quality assessment model and a ground truth (label) relative quality value, for many training data with images and labeled quality values. The computing apparatus may calculate each loss using a loss function that considers a corresponding first relative quality value output by the in-training quality assessment model in response to an input (e.g., one or paired training image) and the corresponding ground truth relative quality value. The computing apparatus may update the parameters (e.g., weights among one or more layers of the in-training quality assessment model) included in the in-training quality assessment model based on the calculated losses. The method of determining the first relative quality value is described in detail with reference to FIGS. 3A and 3B below.

In operation 130, the computing apparatus may obtain second modality data corresponding to a query generated based on the first relative quality value. The computing apparatus may generate the query based on the first relative quality value determined in operation 120. The query may include text for generating data that can be used to compare the quality of images included in the image pair. The query generated in operation 130 may be input to an augmented language model in operation 150. The computing apparatus may obtain the second modality data corresponding to the query, and the second modality data may correspond to data of a text modality.

Herein, as a non-limiting example, an augmented language model may be a machine learning language model (e.g., a neural network-based language model) that may be the result of an augmentation of a base language model (e.g., a large language model or LLM, as a non-limiting example) or a language model with augments, configured to integrate tools, data sources, and/or capabilities that may provide improvements over the performance and functionality of such a base language model. As a non-limiting example, the augmented language model may be generated (e.g., by a computing system described herein) through neural network training, such as alike the aforementioned loss generation and adjustment of a base language model (or incremental adjustment results of the same) or adjustments of an in-training language model for the language model capabilities along with such augmentation features. Such augmentations may include external knowledge integration, such as based on a connecting of the model to databases, search engines, or other knowledge bases, which can include the access of real-time or other specialized information beyond the training data of the base language model, or other training data. Such additional tools may include the use of calculators, code interpreters, or APIs to perform tasks like computations, data analysis, or web searches. The augmentation may include memory augmentation, by configuring the model to include mechanisms to store and recall context over longer interactions; multimodal capabilities, by configuring the model to process and/or generate non-text data, such as images, audio, and/or video (e.g., alongside text) along with other non-text data or operation; and/or reasoning enhancements, by configuring the model to implement strategies of chain-of-though prompting and/or iterative reasoning to improved problem-solving and decision making. Thus, the augmented language model may be more versatile, reliable, and capable of handling complex tasks that go beyond only a text generation of such an example base language model. In various examples herein the augmented language model may be, or at least include configured operations of, a retrieval-augmented generation (RAG) model. For example, the RAG model (or operations thereof) may operate based on an information retrieval system (e.g., retrieval model) and a generation model, where the retrieval system may retrieve data (e.g., based on a given query) and the generation model may generate data based on an inferential operation involving other information in consideration of the retrieval result. For example, the retrieval system may retrieve data from a database or other knowledge (e.g., external) source based on an input or provided query relevant information, which may include the use of a dense vector search or similar mechanism to find data that best matches the query. The augmented language model may include an augmentation of a large language model and/or a visual language model that may be configured to process and generate both text and visual input/outputs. For the generation model, the augmented language model may include a generative machine learning model, such as a transformer-based LLM, that may generate more accurate, informative, and contextually relevant response based on information (e.g., including the retrieved data, as additional context) provided to or otherwise considered by the generative model. As a RAG model, or as including such RAG model capabilities, the augmented language model may be configured to access data (e.g., different from training data for such a base language model, and from other or external sources) that may be real-time or otherwise up-to-date and/or domain-specific information, and provide improved accuracy compared to a base language model, such as by reducing the risk of hallucinations. Herein, while examples are described with a retrieval model being disclosed separate from an augmented language model, examples exist where the augmented language model also includes the retrieval model and corresponding features and operations.

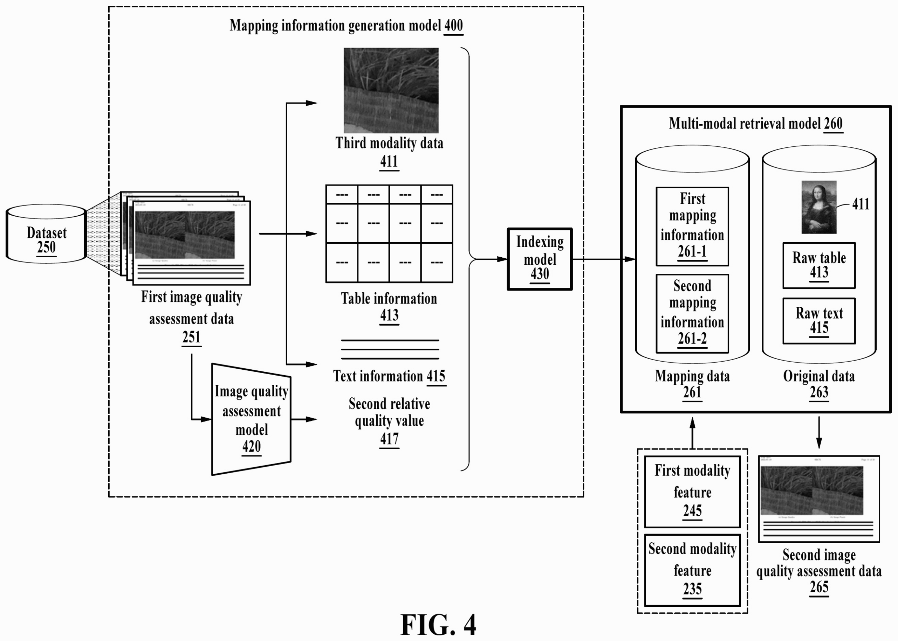

In operation 140, the computing apparatus may obtain, based on a first modality feature obtained based on the first modality data and a second modality feature obtained based on the second modality data, at least one piece of second image quality assessment data from a dataset including a plurality of pieces of first image quality assessment data. The first modality feature may be obtained by vectorizing the first modality data. The second modality feature may be obtained by vectorizing the second modality data. The first modality vector and the second modality vector may be generated in the same vector space. The first modality feature and the second modality feature may have data structures of the same dimensions. First image quality assessment data is a database for the augmented language model and may include pre-generated image quality assessment data. The first image quality assessment data may include image quality assessment data previously generated by the augmented language model and stored to the database by the computing apparatus and/or image quality assessment data input by a user and stored to the database. The computing apparatus may obtain, based on the first image quality assessment data, first mapping information corresponding to the first modality and second mapping information corresponding to the second modality. The computing apparatus may obtain, based on a similarity between at least one of the first modality feature and the second modality feature and at least one of the first mapping information and the second mapping information, second image quality assessment data from a dataset including the plurality of pieces of first image quality assessment data. An example method of obtaining such second image quality assessment data is described in greater detail with reference to FIG. 4 below.

In operation 150, the computing apparatus may generate third image quality assessment data corresponding to the image pair by applying the first modality feature, the second modality feature, and the at least one piece of second image quality assessment data to the augmented language model.

Thus, the computing apparatus may input the first modality feature and the second modality feature to the augmented language model, so that the augmented language model may generate the third image quality assessment data by referring to the second image quality assessment data. The second image quality assessment data may be implemented as context data, and the context data may be refer to data that is considered together when an input is processed by the augmented language model to generate a consistent response in the augmented language model. As a non-limiting example, the third image quality assessment data may include text data comparing the quality between images included in the image pair based on a plurality of quality assessment indices and/or image data corresponding to an input image pair.

Previous qualitative assessment of image quality was inherently subjective, making it difficult to quantify and represent using IQA (image quality assessment) metrics. Such qualitative assessments are typically performed by image quality (IQ) experts, and IQ reports are created with the experts' comments related to image quality for each test image. These reports are exchanged between business departments or clients to facilitate image quality tuning. Since image quality assessment is a qualitative domain, the IQ expert's assessment standards vary by assessor, and in extreme cases, the same assessor may produce different results for the same assessment (the content of an IQ report written last week may differ from that of a report written today for the same image comparison by the same assessor). The large number of assessment categories makes consistent image quality assessment and IQ report creation even more challenging. Thus, human expert IQ assessment is prone to inconsistencies/reversals depending on the assessor, leading to significant inefficiencies/manual effort in the assessment, organization, and reporting process. In addition, assessment standards vary by client, and previously considered factors have typically been accumulated as know-how by only a small number of image quality assessment experts. Further, such image assessment is very time consuming for human IQ experts, as it may take two human IQ experts about a week to generate 40 IQ reports, and is very costly.

Rather, since the computing apparatus may infer (e.g., using an image quality assessment model) various quality indices corresponding to each image included in the image pair of a quality assessment target in the form of relative quantitative values and generate a final quality assessment report using an augmented language model based on the inferred results, the computing apparatus may produce consistent quality assessment results (e.g., as the dataset 250 may include quality assessment data generated by previous image quality assessments, such as in previous IQ reports, that may selectively retrieved to provide related context to the augmented language model) without substantive, for example, deviation compared to human IQ reports. For example, one or more embodiments may provide a generation method of automatically generating a large language model (LLM)-based image quality assessment report (e.g., third quality assessment data) by utilizing the pairwise IQA metric (e.g., first relative quality value) and multi-modal retrieval augmented generation (RAG) techniques (e.g., by a multi-model retrieval model) to provide context to a LLM (e.g., an augmented language model) for inferring the third quality assessment data for image based data input to the LLM. By avoiding to rely entirely on vision-language models, VLM, for image quality assessment, which result in significantly reduced performance when comparing finegrained quality differences between images, an enhanced reliability of IQA is achieved.

FIG. 2 illustrates an example method of generating image quality assessment data, according to one or more embodiments.

Herein, operations of described models (as well as operations within the respective models) may be performed sequentially but not necessarily. For example, the order of the operations of the respective models may be changed, and at least two of the operations may be performed in parallel. Additionally, for ease of description, each model is described separately from the others, but each described model may be understood as a logically distinct concept and implemented alone or in any combination with other models or operations of other models. Each of the models may be implemented by any of the herein described computing apparatuses, combination of computing apparatuses, or one or more computing server devices according to the server design, where the computing apparatus(es) and computing server devices may provide communication (e.g., using busses and/or communication modules) between models in an appropriate manner depending on the implemented form.

While respective elements or operations of such models and other operations may be described and illustrated in the drawings through separate component blocks, each of such component blocks may be representative of one or any combination of respective processor-implemented logic operations or logical blocks, as well as respective processing circuitry (e.g., comprised in one or more processors). For example, in one or more examples, such logical operations or logical blocks are respectively implemented by one or more processors of the computing apparatus or system through the execution of instructions (e.g., respective instructions) stored in memory (e.g., one or more memories) of the computing apparatus or system by the one or more processors to cause the computing apparatus or system to perform the logical operations or logical blocks of any method described herein. For example, a computing apparatus or system herein may configure, through the execution of such instructions, the one or more processors to perform any one, any combination, or all of the logical operations or logical blocks (or other operations described herein) based on and/or in response to the execution of such instructions. As non-limiting examples, the referenced one or more processors of the computing apparatus or system may include a single processor or multiple processors to perform any combination or all generation method operations of the computing apparatus or system described herein, and may refer to respective one or more processors configured to perform each as well as any combinations of the component blocks and/or other operations illustrated or described herein, for performing the respective logical operations or logical blocks or other operations thereof. As a non-limiting example, each processor may include any one or any combination of any two or more of an application-specific integrated circuit (ASIC) chip, field-programmable gate arrays (FPGAs), or other programmablelogic device.

Referring to FIG. 2, a computing apparatus 200 is representative of one or more processors configured to perform operations of an image quality assessment model 210, a prompting model 220, a text encoding model 230, an image encoding model 240, a multi-modal retrieval model 260, and an augmented language model 270. As a non-limiting example, the computing apparatus 200 may correspond to the computing apparatus 900 of FIG. 9., as well as any of the other computing apparatuses described herein. The computing apparatus 200 may load a dataset 250 into a memory of the computing apparatus 200. For example, the memory may correspond to memory 903 of FIG. 9, as a non-limiting example. The dataset 250 may be stored in the memory or other storage media of the computing apparatus 200. The computing apparatus 200 may load the dataset 250 stored in an external memory or cloud storage (hereinafter, "storage space"). As a non-limiting example, the external memory may correspond to memory 913 or database 927 of FIG. 9. The computing apparatus 200 may receive an image pair 205 (also referred to as first modality data 205) corresponding to a first modality and output third image quality assessment data 275. For example, the computing apparatus 200 may capture the image pair 205 from image sensor 907 of FIG. 9, receive the image pair 205 from the image sensor 917 of FIG. 9, or any other memory or storage of FIG. 9, or generate one or more of the image pair 205 using a generative model and/or through tuning of original image(s) or retrieve the same from such memory or other storage media.

The image pair 205 may include a plurality of images 205-1 and 205-2. The image quality assessment model 210 may obtain a first relative quality value 215 by performing image quality assessment based on received first modality data 205. Here, while the first modality data 205 may be the image pair, examples are not limited thereto and the first modality data 205 may include image information based on the image pair. As a non-limiting example, the image quality assessment model 210 may correspond to the image quality assessment model of FIG. 1. For example, the image quality assessment model 210 may be a machine learning model. An example operation of the image quality assessment model 210 is described in greater detail with reference to FIGS. 3A and 3B below.

The prompting model 220 may generate a query based on the first relative quality value 215 received from the image quality assessment model 210. The prompting model 220 may be a model that generates a query based on predefined rules applied to the first relative quality value 215. Alternatively, the prompting model 220 may be a prompt generating language model, e.g., a machine learning prompt generating language model that generates a query by inputting, to the prompt generating language model, the first relative quality value 215. The output query of the prompting model 220 may be second modality data 225, which may be in a text format.

The text encoding model 230 may receive the second modality data 225 generated by the prompting model 220 and output a second modality feature 235. The text encoding model 230 may output the second modality feature 235 by vectorizing the second modality data 225 in the example text format. The image encoding model 240 may receive the first modality data 205 corresponding to the image pair (e.g., as the image pair) and output a first modality feature 245. The image encoding model 240 may output the first modality feature 245 by vectorizing the first modality data 205.

In some embodiments, the text encoding module 230 and the image encoding module 240 may each include or correspond to a machine learning model trained to encode respective modality data into a shared embedding space. For instance, the text encoding module 230 may be implemented using a Transformer-based language encoder (e.g., a CLIP(Contrastive Language-Image Pretraining) text encoder), while the image encoding module 240 may utilize a convolutional neural network or a Vision transformer (ViT), also trained as part of the CLIP framework. In an example, the text encoding model 230 may refer to the first modality feature 245 output from the image encoding model 240 in generating the second modality feature 235. Alternatively, in an example, the image encoding model 240 may refer to the second modality feature 235 output from the text encoding model 230 in generating the first modality feature 245.

The multi-modal retrieval model 260 may include outputting at least one piece of second image quality assessment data from the dataset 250 based on the first modality feature 245 output from the image encoding model 240 and the second modality feature 235 output from the text encoding model 230. The dataset 250 may include a plurality of pieces of first image quality assessment data. The dataset 250 may be input from a user and/or an administrator and stored in a storage space (e.g., memory or other storage media) of the computing apparatus. Alternatively, the dataset 250 may include pieces of previously generated third image quality assessment data 275 stored by the computing apparatus 200 prior to the current generation process (e.g., as image quality assessments or reports of other image(s)). An example detailed operation method of the multi-modal retrieval model 260 is described in greater detail with reference to FIG. 4 below.

The augmented language model 270 may generate the third image quality assessment data 275 by considering the second image quality assessment data 265 output in the multi-modal retrieval model 260, the first modality feature 245 output from the image encoding model 240, and the second modality feature 235 output from the text encoding model 230. For example, the augmented language model 270 may apply the second image quality assessment data 265 as a context input, and the first modality feature 245 and the second modality feature 235 as regular inputs, to the augmented language model 270. The augmented language model 270 may generate the third image quality assessment data 275 in a format similar to the second image quality assessment data 265 by utilizing the image information of the first modality feature 245 and the text information of the second modality feature 235.

FIG. 3A illustrates an example method of an image quality assessment model, according to one or more embodiments.

Referring to FIG. 3A, the image quality assessment model 210 may include an encoding model 311, a plurality of quality prediction models 313, and a relative quality value determination model (hereinafter, "determination model") 330. The image quality assessment model 210 may receive the image pair 205 and output the first relative quality value 215 corresponding to the image pair 205. In FIG. 3A, for ease of description, the image pair 205 is illustrated as including two images (a first image 205-1 and a second image 205-2), but is not limited thereto, and may include a plurality of images more than two images.

The image quality assessment model 210 may perform processes 310-1 and 310-2 respectively with respect to the two images included in the image pair 205 to generate quality values 320-1 and 320-2 respectively corresponding to the images 205-1 and 205-2. Both processes 310-1 and 310-2 may each execute the encoding model 311 and the plurality of quality prediction models 313 to generate the respective quality values 320-1 and 320-2. If the plurality of images include more than two images, then the encoding model 311 and the plurality of quality prediction models 313 may likewise be implemented to generate a corresponding quality value for each additional image. The processes 310-1 and 310-2 may be performed in parallel or in a pipelining manner.

The encoding model 311 may receive a corresponding image included in the image pair 250. For example, the encoding model 311 may receive the first image 205-1 included in the image pair 205. The encoding model 311 may extract a quality feature 312 of the received image. A quality feature is a high-dimensional representation of the visual quality of an image and may include data that vectorizes visual quality characteristics extracted by the encoding model 311. In various examples herein, the encoding model 311 may be a machine learning model (e.g., a neural network model, such as a ResNet model, or other neural network model, as a non-limiting example) that may numerically compress the characteristics of an image and convert the characteristics into an analyzable form.

The plurality of quality prediction models 313 may include respective quality prediction models that may each predict a quality corresponding to each of a plurality of quality indices. For example, the plurality of quality prediction models 313 may include an overall quality predictor, a noise quality predictor, an edge quality predictor, a texture quality predictor, a color quality predictor, a tone quality predictor, an artifact quality predictor, and the like. The plurality of quality prediction models 313 may output a first quality value 320-1 corresponding to the first image 205-1 based on an output quality value corresponding to each of the plurality of quality indices. In an example, the operation of the encoding model 311 in combination with the plurality of quality prediction models 313 may be a referred as a no-reference image quality assessment. In addition, the operation method of the encoding model 311 and the plurality of quality prediction models 313 of the first image 205-1 described above may apply in the same manner to the process 310-2 of the second image 205-2 to output a second quality value 320-2 corresponding to the second image 205-2, and alike for any remaining images of the plurality of images of the image pair.

The determination model 330 may receive the quality values (the first quality value 320-1 and the second quality value 320-2) respectively corresponding to the plurality of images 205-1 and 205-2 included in the image pair 205 and determine and output the first relative quality value 215. The determination model 330 may determine the first relative quality value by applying a softmax function to the quality values (the first quality value 320-1 and the second quality value 320-2) respectively corresponding to the plurality of images 205-1 and 205-2. For example, for each of the plurality of images 205-1 and 205-2, the first relative quality value 215 may be determined by dividing the quality value of a corresponding image (the first quality value 320-1 or the second quality value 320-2) by the sum of the quality values (the first quality value 320-1 and the second quality value 320-2) respectively corresponding to the plurality of images. Alternatively, for each of the plurality of images 205-1 and 205-2, the determination model 330 may obtain the first relative quality value representing the quality value of a corresponding image (the first image 205-1 or the second image 205-2) in binary format. For example, the determination model 330 may determine the first relative quality value by setting a relative quality value corresponding to an image having a maximum (max) quality value in response to a predetermined quality index to 1 and the relative quality value of the remaining image to 0. The first relative quality value 215 may also be referred to as a pairwise score, and the image quality assessment model 210 may be referred to as a pairwise image quality assessment model. As a non-limiting example, for each image, the image quality assessment model 210 may include neural network layers, such as one or more layers configured to perform an encoding of a corresponding input image, and subsequent layer(s) in parallel or otherwise configured representing the plurality of quality prediction models 313 to generate the corresponding quality value based on the result of the encoding, and with each of the respective quality values for the different input images being input to a softmax layer of the neural network that represents the determination model 330, the output of which may be the first quality value 215. For example, any computing apparatus or system described herein (e.g., of FIGS. 1-9) may include one or more processors configured to execute the image quality assessment model 210 of FIG. 3A.

FIG. 3B illustrates an example method of an image quality assessment model, according to one or more embodiments.

In an example, any computing apparatus or system described herein (e.g., of FIGS. 1-9) may include one or more processors configured to execute the image quality assessment model 210 of FIG. 3B.

Referring to FIG. 3B, the image quality assessment model 210 may include encoding models 311-1 and 311-2, a fusion model 340, and a plurality of quality prediction models 350. The image quality assessment model 210 may receive the image pair 205 and output the first relative quality value 215 corresponding to the image pair 205. In FIG. 3B, for ease of description, the image pair 205 is illustrated as including two images (the first image 205-1 and the second image 205-2), but is not limited thereto, and may include a plurality of images. As a non-limiting example, each of the encoding models 311-1 and 311-2 illustrated in FIG. 3B may be the same as the encoding model 311 described above with reference to FIG. 3A.

The encoding models 311-1 and 311-2 may obtain a first quality feature of a corresponding image for each of the plurality of images included in the image pair, such as described above with respect to FIG. 3A. Similar to the above discussion of FIG. 3A, while FIG. 3B illustrates two encoding models 311-1 and 311-2, this is for ease of description, as the image quality assessment model 210 may obtain respective first quality features for each of the plurality of images (e.g., two or more images) in parallel through respective encoding models each input a different image among the image pair 205, or may obtain the respective first quality feature by performing each respective first quality feature extraction/generation in a pipelining manner using the same encoding model multiple times.

The computing apparatus may generate a second quality feature by fusing (e.g., using the fusion model 340) first quality features respectively corresponding to the plurality of images. The second quality feature may be generated by combining the first quality features and a difference feature of the first quality features and passing the combined result through one or more convolutional layers of the fusion model 340. The difference feature is a feature used to emphasize a predetermined pattern or degree of change in input data and may include a feature that may be utilized to detect local changes in image processing.

The plurality of quality prediction models 350 may obtain the first relative quality values 215 corresponding to a plurality of quality indices based on the second quality feature. The first relative quality value 215 may include a probability value indicating a probability that, in response to each of the plurality of images 205-1 and 205-2 included in the image pair, a value corresponding to the quality of a corresponding image (the first image 205-1 or the second image 205-2) among the values respectively corresponding to the quality levels of the plurality of images 205-1 and 205-2 has a value corresponding to a maximum (max) quality.

For example, when a sharpening prediction model generates the first relative quality value 215-1 corresponding to a sharpening-texture quality index, the first relative quality value 215-1 may include a first probability value of 0.8 that indicates the higher probability of the first image 250-1 having the best color accuracy among the first image 250-1 and the second image 250-2 included in the image pair 205, and a second probability value of 0.2 that indicates the lower probability of the second image 250-2 having the best color accuracy among the first image 250-1 and the second image 250-2. In this example, as the first probability value is greater than the second probability value, there is a greater probability that the first image 250-1 has the best color accuracy among the first image 250-1 and the second image 250-2.

FIG. 4 illustrates an example method of a multi-modal retrieval model, according to one or more embodiments.

In an example, any computing apparatus or system described herein (e.g., with respect to FIGS. 1-9) may include one or more processors configured to implement a mapping information generation model 400 and a multi-model retrieval model 260 of FIG. 4. As a non-limiting example, the multi-modal retrieval model 260 correspond to the multi-modal retrieval model 260 of FIG. 2.

Referring to FIG. 4, the mapping information generation model 400 may include an image quality assessment model 420 and an indexing model 430. The mapping information model 400 may obtain mapping data 261 based on first image quality assessment data 251 included in the dataset 250. The mapping information generation model 400 may be included in and implemented by the computing apparatus or may be included in and implemented by a separate apparatus (e.g., storage device) or other computing apparatus/system. The mapping information generation model 400 may be performed in advance offline or may be performed in real time online.

The mapping information generation model 400 may extract, from the first image quality assessment data 251 of the dataset 250, third modality data 411, table information 413, and text information 415 corresponding to an image pair included in the first image quality assessment data 251. Additionally, the mapping information generation model 400 may obtain a second relative quality value 417 through an image quality assessment model 420 that is input/provided the image pair included in the first image quality assessment data 251. The image quality assessment model 420 may be, or have the same configuration as, the image quality assessment model 210 described above with reference to any of FIGS. 2, 3A, and 3B. The table information 413 may include metadata corresponding to the third modality data 411. For example, the table information 413 may include an image tuning model name, image tuning parameters, product generation, content of an assessment image, illuminance, a shooting environment, a subjective image quality assessment score, a target signal processing method, and the like.

The mapping information generation model 400 may input the third modality data 411, the table information 413, the text information 415, and the second relative quality value 417 obtained from the first image quality assessment data 251 to the indexing model 430 to generate first mapping information 261-1 and second mapping information 261-2. The indexing model 430 may perform indexing by converting data into a unique key or structured form (e.g., a vector, a token, a tag, etc.) so that each piece of data included in a dataset (e.g., dataset 250) may be quickly retrieved or compared. The indexing model 430 may be a language model that is trained to output such converted data based on such inputs. The indexing model 430 may generate the first mapping information 261-1 including corresponding indexed information based on the third modality data 411 corresponding to the image pair of the first image quality assessment data. Additionally, the indexing model 430 may generate the second mapping information 261-2 including corresponding indexed information based on the table information 413, the text information 415, and the second relative quality value 417 of the first image quality assessment data 251.

The multi-modal retrieval model 260 may perform retrieval using the mapping data 261 generated by the indexing model 430 and original data 263 from the first image quality assessment data 251. For example, the original data 263 may include the third modality data 411, the table information 413, and the text information 415 extracted from (or included in) the first image quality assessment data 251. For example, raw table 413 and raw text 415 may respectively be the table information 413 and text information 415 considered in the mapping information generation model 400. The multi-modal retrieval model 260 may receive a first modality feature 245 and a second modality feature 235 (e.g., the first modality feature 245 and the second modality feature 235 of FIG. 2) and output the second image quality assessment data 265 (e.g., the second image quality assessment data 265 of FIG. 2). The multi-modal retrieval model 260 may analyze the similarity between at least one of the received first modality feature 245 and the second modality feature 235 and at least one of the first mapping information 261-1 and the second mapping information 261-2. For example, the multi-modal retrieval model 260 may analyze the similarity between the received first modality feature 245 and the first mapping information 261-1, the similarity between the received first modality feature 245 and the second mapping information 261-2, the similarity between the received second modality feature 235 and the first mapping information 261-1, and/or the similarity between the received second modality feature 235 and the second mapping information 261-2. Since the first modality feature 245 and the second modality feature 235 are generated in the same vector space, the multi-modal retrieval model 260 may analyze a first similarity between the first modality feature 245 and the second mapping information, and the multi-modal retrieval model 260 may analyze a second similarity between the second modality feature 235 and the first mapping information, and vice versa. Similarity analysis may be performed using a mathematical distance or a similarity index, and various analysis methods may be used depending on the characteristics of data. The multi-modal retrieval model 260 may output at least one second image quality prediction data using the original data 263 corresponding to the first mapping information 261-1 and/or the second mapping information 261-2 that is finally mapped according to the similarity analysis. Accordingly, the multi-modal retrieval model 260 may output the second image quality prediction data 265 including the third modality data 411 having similar image quality characteristics and level to the first modality data 205.

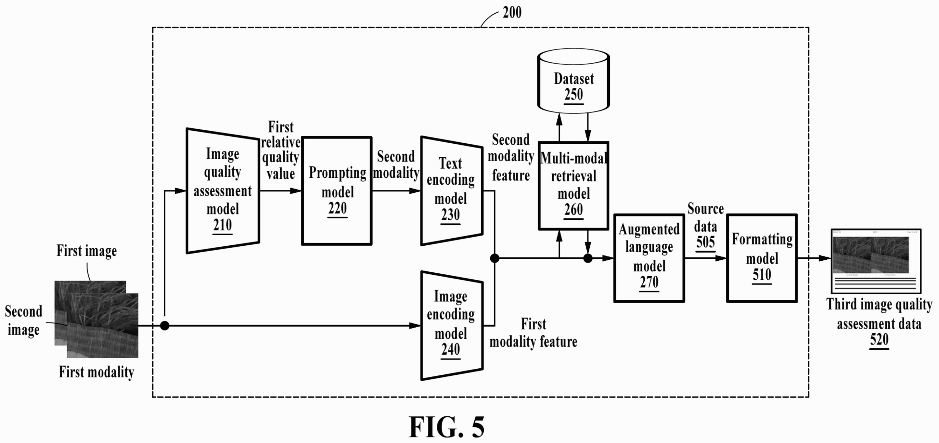

FIG. 5 illustrates an example method of formatting image quality assessment data, according to one or more embodiments.

Referring to FIG. 5, a computing apparatus 200 is representative of one or more processors configured to perform operations of an image quality assessment model 210, a prompting model 220, a text encoding model 230, an image encoding model 240, a multi-modal retrieval model 260, an augmented language model 270, and a formatting model 510. As a non-limiting example, the image quality assessment model 210, the prompting model 220, the text encoding model 230, the image encoding model 240, the multi-modal retrieval model 260, and the augmented language model 270 may correspond to (e.g., be the same as) the image quality assessment model 210, the prompting model 220, the text encoding model 230, the image encoding model 240, the multi-modal retrieval model 260, and the augmented language model 270 of FIG. 2. As a non-limiting example, the computing apparatus 200 may correspond to the computing apparatus of any of FIGS. 1- 9. The computing apparatus 200 may obtain source data 505 of third image quality assessment data by applying the illustrated first modality feature, the illustrated second modality feature, and at least one piece of second image quality assessment data output by the multi-model retrieval model to the augmented language model 270. The formatting model 510 may receive the source data 505 output from the augmented language model 270, format the source data 505 in a predetermined format, and output the third image quality assessment data. The source data 505 may include text data and/or image data corresponding to an input image pair. The predefined format may include a document template and may include document templates that may be utilized in various fields, such as a business report template, a research and academic document template, a technical and engineering document template, and the like. The formatting model 510 may be a model that generates third image quality assessment data based on a predefined rule that may generate data in the predetermined format. Alternatively, the formatting model 510 may not be included, and instead the prompting model 230 may additionally generate in the second modality data prompt information that is reflected in the second modality feature so as to ultimately instruct the augmented language model 270 to generate the third image quality assessment data in the predetermined format.

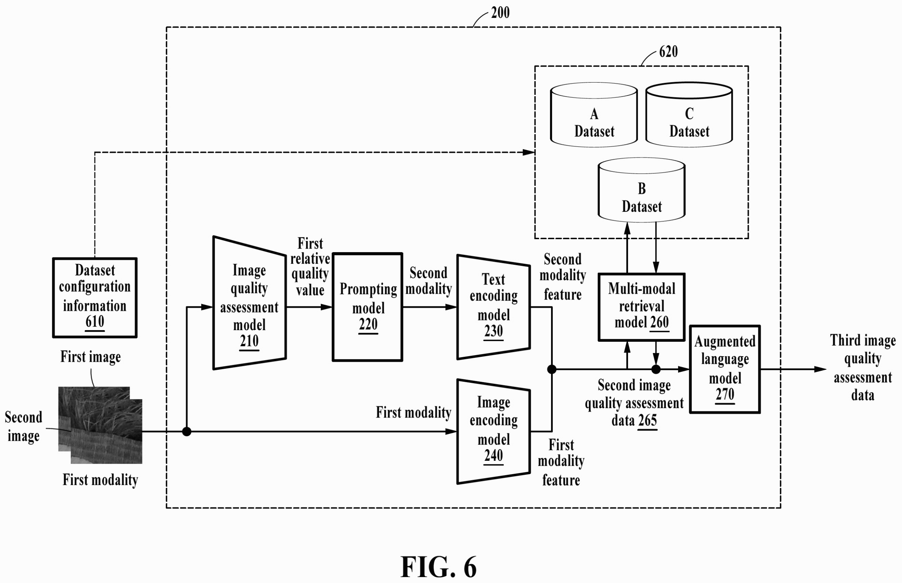

FIG. 6 illustrates an example method of generating image quality assessment data based on a dataset input, according to one or more embodiments.

Referring to FIG. 6, a computing apparatus 200 is representative of one or more processors configured to perform operations of an image quality assessment model 210, a prompting model 220, a text encoding model 230, an image encoding model 240, a multi-modal retrieval model 260, and an augmented language model 270, obtain dataset setting information 610, and use a select dataset (based on the data setting information 610) among data datasets 620 in the generating of the second image quality assessment data 265. As a non-limiting example, the image quality assessment model 210, the prompting model 220, the text encoding model 230, the image encoding model 240, and the augmented language model 270 may correspond to (e.g., be the same as) the image quality assessment model 210, the prompting model 220, the text encoding model 230, the image encoding model 240, and the augmented language model 270 of FIG. 2. As a non-limiting example, the computing apparatus 200 may correspond to the computing apparatus of any of FIGS. 1-9.

The dataset setting information 610 may include information related to a dataset being referenced when the computing apparatus 200 refers to a plurality of datasets 620. The dataset setting information 610 may be obtained by user-related information using the computing apparatus 200 or may be automatically extracted based on an input first modality. For example, the dataset setting information 610 may include information on a client to which a user belongs in order to set a dataset corresponding to assessment criteria based on preferred image quality for each client. Additionally, the dataset setting information 610 may include the country/age/gender information of the user to set a dataset (from among the datasets 620) corresponding to assessment criteria based on the country/age/gender of the user. The computing apparatus 200 may generate the second image quality assessment data 265 using the set (or selected) dataset corresponding to the dataset setting information 610 among the plurality of datasets 620. In an example, the multi-modal retrieval model 260 may correspond to the multi-modal retrieval model 260 of FIG. 2, but may be further configured to use the set (or selected) dataset. Alternatively, the multi-modal retrieval model 260 may be the same as the multi-modal retrieval model 260 of FIG. 2, which is also configured to use the set (or selected) dataset.

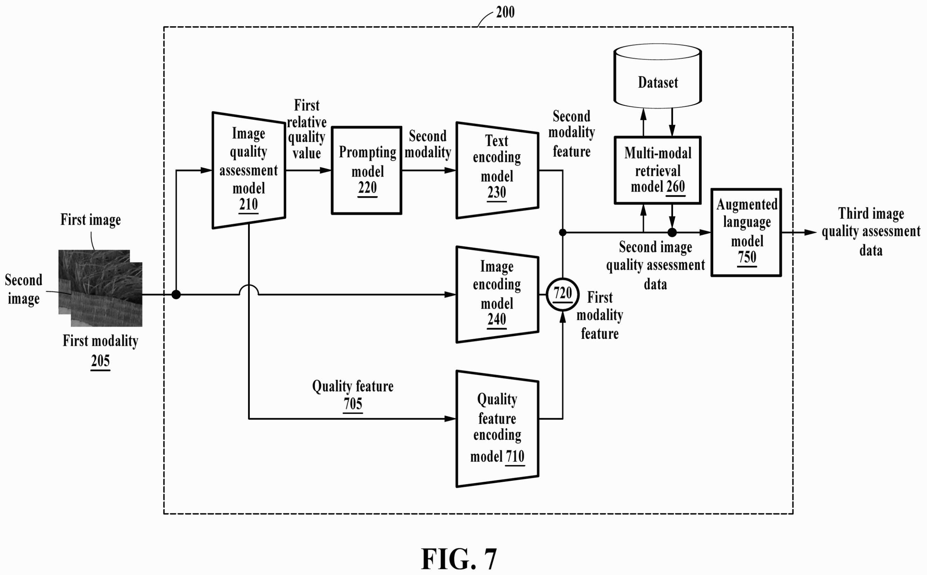

FIG. 7 illustrates an example method of generating image quality assessment data according to a dataset input, according to one or more embodiments.

Referring to FIG. 7, the computing apparatus 200 is representative of one or more processors configured to perform operations of an image quality assessment model 210, a prompting model 220, a text encoding model 230, an image encoding model 240, a multi-modal retrieval model 260, an augmented language model 750, a quality feature encoding model 710, and a merging model 720. As a non-limiting example, the prompting model 220, the text encoding model 230, the image encoding model 240, and the multi-modal retrieval model 260 may correspond to (e.g., be the same as) the prompting model 220, the text encoding model 230, the image encoding model 240, and the multi-modal retrieval model 260 of FIG. 2. As a non-limiting example, the computing apparatus 200 may correspond to the computing apparatus of any of FIGS. 1-9.

The quality feature encoding model 710 may receive a quality feature 705 of the first modality 205 generated by the image quality assessment model 210 and output pixel-level information corresponding to the first modality 205. In an example, the image quality assessment model 210 may correspond to the image assessment model 210 of FIG. 2, but may be further configured to generate and output the quality feature 705. Alternatively, the image quality assessment model 210 may be the same as the image assessment model 210 of FIG. 2, which is configured to generate and output the quality feature 705. For example, the quality feature 705 may include a quality feature output from at least one encoding model of the image assessment model 210, such the encoding modules 311 described above with reference to FIGS. 3A and 3B. The pixel-level information may include quality characteristics corresponding to each pixel of an image included in the first modality 205.

The merging model 720 may obtain a (1-1)-th modality feature by merging the pixel-level information output from the quality feature encoding model 710 and a first modality feature (e.g., first modality feature 245 of FIG. 2) output from the image encoding model 240. As a non-limiting example, the augmented language model 750 may correspond to the augmented language model 270 of FIG. 2 except that the augmented language model 750 may be configured to generate the third image quality data based on the second modality feature and the (1-1)-th modality feature. In addition, the first modality features described with reference to any of FIGS. 1 to 6 may include the (1-1)-th modality feature. The computing apparatus 200 performs the generation method by utilizing the (1-1) modality feature including the pixel-level information, thereby supplementing pixel-level assessment information (pixel-level IQ semantics) that may otherwise be difficult to know only with image quality assessment at an image quality level (image-level IQ semantics), thereby generating more detailed third image assessment result data.

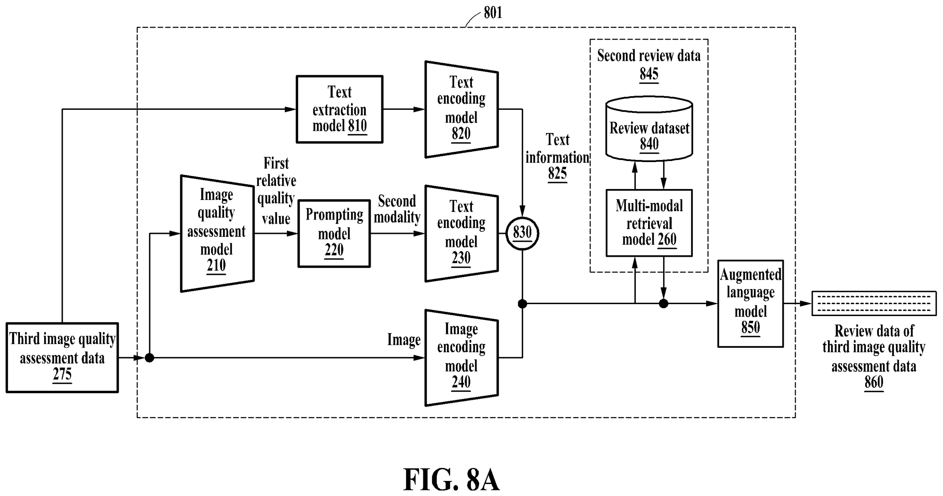

FIG. 8A illustrates an example method of generating review data, according to one or more embodiments.

In an example, any computing apparatus or system described herein (e.g., of FIGS. 1-9) may include one or more processors configured to execute a review model 801 of FIG. 8A.

Referring to FIG. 8A, the review model 801 may include an image quality assessment model 210, a prompting model 220, a text encoding model 230, an image encoding model 240, a multi-modal retrieval model 260, an augmented language model 850, a text extraction model 810, a text encoding model 820, and a merging model 830. As a non-limiting example, the image quality assessment model 210, the prompting model 220, the text encoding model 230, and the image encoding model 240 may correspond to (e.g., be the same as) the image quality assessment model 210, the prompting model 220, the text encoding model 230, and the image encoding model 240 of FIG. 2. As a non-limiting example, a computing apparatus may include a plurality of processors configured to perform the review model 801, and the computing apparatus may correspond to the computing apparatus of any of FIGS. 1-9. In an example, the prompting model 220 may also perform score-based prompting.

The computing apparatus may receive previously generated third image quality assessment data 275 (e.g., generated by any of the generation methods of FIGS. 1-7 and 8B-9 herein) and output third review data 860 of the third image quality assessment data 275.

The text extraction model 810 may extract text data from the third image quality assessment data 275. The text encoding model 820 may receive text data of the third image quality assessment data 275, convert the text data into a vector format, and obtain text information 825 that numerically expresses the meaning, structure, or properties of a sentence. The merging model 830 may obtain a (2-1)-th modality feature by merging the text information 825 and a second modality feature (e.g., second modality feature 235 of FIG. 2) output by the text encoding model 230.

The multi-modal retrieval model 260 may obtain at least one piece of second review data 845 from a dataset including a plurality of pieces of first review data generated in advance based on a first modality feature (e.g., first modality feature 245 of FIG. 2) output by the image encoding model 240 and the (2-1)-th modality feature. In an example, the multi-modal retrieval model 260 may correspond to the multi-modal retrieval model 260 of FIG. 2, but may be further or alternately configured to obtain the at least one piece of second review data 845. Alternatively, the multi-modal retrieval model 260 may be the same as the multi-modal retrieval model 260 of FIG. 2, which is also configured to obtain the at least one piece of second review data 845. The first review data may include review data generated in advance as a database for reviewing the third image quality assessment data. The first review data may include review data previously generated through the computing apparatus or review data input by a user.

The augmented language model 850 may receive the first modality feature and the (2-1)-th modality feature and generate the third review data 860 of the third image quality assessment data by referring to the second review data 845. The second review data 845 may be implemented as context data. The augmented language model 850 may correspond to the augmented language model 270 of FIG. 2 except that the augmented language model 850 may be configured to generate the third review data 860, corresponding to the third image quality assessment data 275 through an input of a system prompt, based on the first modality feature and the (2-1)-th modality feature. The system prompt may include data related to initial instructions that determine a behavior and a response style of a model. The system prompt may include a prompt to generate data related to a review of image quality assessment data. The third review data 860 may include text-level data.

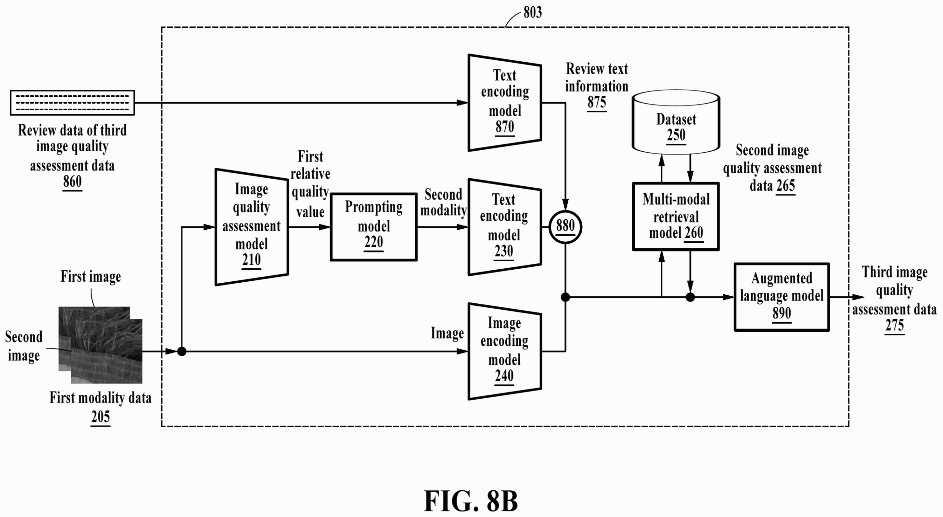

FIG. 8B illustrates an example method of generating image quality assessment data based on review data, according to one or more embodiments.

In an example, any computing apparatus or system described herein (e.g., of FIGS. 1-9) may include one or more processors configured to execute a review-reflected assessment model 803 of FIG 8B. The computing apparatus or system may further be configured to perform the review model 801 of FIG. 8A, such as through iterative performances of the review model 801 and the review-reflected assessment model 803.

Referring to FIG. 8B, the review-reflected assessment model 803 may include an image quality assessment model 210, a prompting model 220, a text encoding model 230, an image encoding model 240, a multi-modal retrieval model 260, an augmented language model 890, a text encoding model 870, and a merging model 880. As a non-limiting example, the image quality assessment model 210, the prompting model 220, the text encoding model 230, and the image encoding model 240 may correspond to (e.g., be the same as) the image quality assessment model 210, the prompting model 220, the text encoding model 230, and the image encoding model 240 of FIG. 2.

The computing apparatus may receive the first modality data 205 and third review data 860 (e.g., third review data 860 generated by the review model 801 of FIG. 8A) corresponding to an image pair and output the third image quality assessment data 275 reflecting the third review data 860. The computing apparatus may also generate the third review data 860 by performing the review model 801 of FIG. 8A, so such receipt of the third review data 860 may not be necessary.

The text encoding model 870 may convert text data of the third review data 860 into a vector format, and obtain review text information 875 that numerically expresses the meaning, structure, or properties of a sentence, for example. The merging model 880 may obtain a (2-2)-th modality feature by merging the review text information 875 and a second modality feature (e.g., second modality feature 235 of FIG. 2) output by the text encoding model 230. The multimodal retrieval model 260 may obtain at least one piece of second image quality assessment data 265 from a dataset including first review data based on a first modality feature (e.g., first modality feature 245 of FIG. 2) output by the image encoding model 240 and the (2-2)-th modality feature. In an example, the multi-modal retrieval model 260 may correspond to the multi-modal retrieval model 260 of FIG. 2, but may be further or alternately configured to obtain the at least one piece of second image quality assessment data 265 from the dataset including the first review data based on the first modality feature and the (2-2)-th modality feature. Alternatively, the multi-modal retrieval model 260 may be the same as the multi-modal retrieval model 260 of FIG. 2, which is also configured to obtain the at least one piece of second image quality assessment data 265 from the dataset including the first review data based on the first modality feature and the (2-2)-th modality feature.

An augmented language model 890 may receive the first modality feature and the (2-2)-th modality feature and generate the third image quality assessment data 275 by referring to the third review data 860. The augmented language model 890 may correspond to the augmented language model 270 of FIG. 2 except that the augmented language model 890 may be configured to generate the third image quality assessment data 275 based on the first modality feature and the (2-2)-th modality feature and by referring to the third review data 860 through the input of the system prompt. The system prompt may include a prompt to generate modified image quality assessment data by referring to data in a review format. The augmented language model 890 may reduce a phenomenon (e.g., hallucination) of generating incorrect information or unfounded content that is not based on actual data or facts of the language model by generating the third image quality assessment data 275 by referring to the third review data 860, and thus, may refine the third image quality assessment data 275.

The third image quality assessment data 275 generated by the review-reflected assessment model 803 may be input again to a review model, such as the review model 801 of FIG. 8A, and the review model 801 may be implemented to generate another third review data corresponding to the input third image quality assessment data 275 that was output by the augmented language model 890. The input and generation process between the review model 801 and the review-reflected assessment model 803 for the first modality data 205 may be repeated multiple rounds or iterations. Third review data 860 output from the review model 801 and the first modality data may be input to the review-reflected assessment model 803, and when the third image quality assessment data 275 generated from the review-reflected assessment model 803 in one round/iteration is the same as the third image quality assessment data 275 generated in the previous round/iteration, the repetition or iterative process may be stopped.

FIG. 9 illustrates an example computing apparatus and computing system, according to one or more embodiments.

Referring to FIG. 9, a computing apparatus 900 may include a processor 901, a memory 903, a communication module 905, an image sensor 907, Input/Output hardware 909, and bus 910. The computing apparatus 900 may be or correspond to any of the computing apparatuses described above with reference to FIGS. 1 to 8B. The computing apparatus 900 may be included in a computing system 920, which may additionally include a memory 913, an image sensor 917, and a database 927 that are disposed exterior of the computing apparatus 900.

The processor 901, which is representative of one or more processors, may perform any, any combination, or all operations described above with reference to FIGS. 1 to 9. For example, through or in response to the execution of instructions stored in the memory 903 by the processor 901, the processor 901 may be configured to generate a first modality vector based on first modality data corresponding to an image pair including different levels of quality and like or same visual information (e.g., related visual information), generate a first relative quality value corresponding to a plurality of indices predetermined based on the first modality data, generate a second modality data corresponding to a query generated based on the first relative quality value, retrieve, from a dataset including a plurality of pieces of first image quality assessment data, at least one piece of second image quality assessment data based on a similarity between the first modality feature and a second modality feature obtained based on the second modality data, and generate third image quality assessment data corresponding to the image pair by applying the first modality feature, the second modality feature, and at least one piece of second image quality assessment data to an augmented language model.

The memory 903, representative of one or more memories, may be a volatile memory and/or a non-volatile memory and may store data related to any of the methods described above with reference to FIGS. 1 to 9. For example, the memory 903 may store data generated during the process of performing a generation method described herein or data required to perform the generation method. For example, the memory 903 may store a dataset including a plurality of pieces of first image quality assessment data. The memory 903 may further store any and all of the models described herein with reference to FIGS. 1 to 9.

In an example, a memory 913 (or as another memory 903, and also representative of one or more memories) may be disposed external of the computing apparatus 900 within the computing system 920. For example, the computing apparatus 900 may receive data stored in the external memory 913 and may transmit data to be stored in the external memory 913 using the communication module 905.

The memory 903 (and/or memory 913) may store code (e.g., the instructions) to be executed by the processor 901 to cause the computing apparatus 900 to perform any or any combination of the methods described above with reference to FIGS. 1 to 9. For example, the processor 901 may execute the code (e.g., inclusive of one or more respective codes) stored in the memory 903 to control (i.e., cause) the computing apparatus 900 to perform any or any combination of the methods described above with reference to FIGS. 1 to 9. The code may also be in a form of a program that may be stored in the memory 903. The memory 903, the memory 913, and/or the database 927 (representative of another storage media) may also store any of the databases, datasets, and model results described herein.

The communication module 905 according to one or more embodiments is hardware configured to provide communication between the computing apparatus 900 and another electronic device or a server, for example, through a network. In other words, the computing apparatus 900 may be connected to an external device (e.g., a terminal of a user, a server, or a network) through the communication module 905 and exchange data with the external device. As a non-limiting example, the communication module 905 may include one or more wired and/or wireless transceivers, and may communicate with other components of the computing apparatus 900 through the bus 910.

The image sensors 907 and 917, each representative of one or more image sensors, may capture any of the image and image pairs described herein. In an example, the image sensor 907 may not be included in the computing apparatus 900.

The computing apparatus 900 may further include other components represented by the Input/Output hardware 909, which may include input/output interfaces including an input device and an output device as the respective hardware configured to interface with the communication module 905, as well as a display and user interface devices or hardware, such as in an example where the computing system 920 is a mobile device, such as a smartphone.

The processors, memories, image sensors, communication modules, buses, image sensors, input/output hardware, and dataset and database storage media described herein, including descriptions with respect to respect to FIGS. 1-9, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-9 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean to transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of all variations within the scope of the claims.

## Claims

1. A processor-implemented method, the method comprising:
generating a first modality data that corresponds to an image pair that comprise different levels of quality and have related visual information;
generating, based on the first modality data, a first relative quality value corresponding to a plurality of quality indices that are predetermined;
generating second modality data corresponding to a query that is generated based on the first relative quality value;
retrieving, based on the first modality feature and a second modality feature, at least one piece of second image quality assessment data from a dataset comprising a plurality of pieces of first image quality assessment data, where the second modality feature is generated based on the second modality data; and
generating third image quality assessment data corresponding to the image pair by applying the first modality feature, the second modality feature, and the at least one piece of second image quality assessment data to an augmented language model.

2. The method of claim 1, wherein the generating of the first relative quality value comprises:
for each of a plurality of images comprised in the image pair, generating a quality value corresponding to the plurality of quality indices of a corresponding image; and
generating the first relative quality value based on the quality values.

3. The method of claim 1 or 2, wherein the generating of the first relative quality value comprises:
generating a first quality feature of a corresponding image for each of a plurality of images comprised in the image pair;
generating a second quality feature by fusing the first quality features; and
generating the first relative quality value corresponding to the plurality of quality indices based on the second quality feature.

4. The method of claim 3, wherein the first relative quality value comprises a probability value indicating a respective probability, for each image of the image pair, that a corresponding image has a greatest quality for a same quality index, among the quality indexes, among all images of the image pair.

5. The method of any one of the previous claims, wherein
the generating of the first relative quality value comprises generating the first relative quality value using a quality assessment machine learning model that is provided the first modality data.

6. The method of any one of the previous claims,
wherein the first modality feature is generated by vectorizing the first modality data,
wherein the second modality feature is generated by vectorizing the second modality data, and
wherein the first modality feature and the second modality feature are respectively generated into a same vector space.

7. The method of any one of the previous claims, further comprising:
generating, based on the first image quality assessment data, first mapping information corresponding to the first modality data and second mapping information corresponding to the second modality data,
wherein the retrieval of the at least one piece of second image quality assessment data is performed based on the first mapping information and/or the second mapping information.

8. The method of claim 7, wherein the retrieving of the at least one piece of the second image quality assessment data comprises retrieving, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset; and/or
wherein the first mapping information comprises information indexed based on another image pair corresponding to the first image quality assessment data, and the second mapping information comprises information indexed based on any one or any combination of text information of the first image quality assessment data, table information, and a second relative quality value determined based on the first mapping information.

9. The method of any one of the previous claims, wherein the generating of the third image quality assessment data comprises generating the third image quality assessment data using the augmented language model provided the first modality feature and the second modality feature, with the use of the language model including the language model considering the at least one piece of second image quality assessment data as context information.

10. The method of any one of the previous claims, wherein the generating of the third image quality assessment data further comprises:
generating source data of the third image quality assessment data using the augmented language model provided the first modality feature, the second modality feature, and the at least one piece of second image quality assessment data; and
generating the third image quality assessment data by formatting the source data into a predetermined format.

11. The method of any one of the previous claims, further comprising:
generating dataset setting information,
wherein the dataset comprises a plurality of datasets, and
wherein the generating of the second image quality assessment data comprises generating the second image quality assessment data from one dataset, from among the plurality of datasets, corresponding to the dataset setting information; and/or
wherein the first modality feature is a (1-1)-th modality feature based on the first modality feature and pixel-level information obtained from a quality feature that is generated in the generating of the first relative quality value.

12. The method of any one of the previous claims, further comprising:
extracting text information based on the third image quality assessment data;
generating a (2-1)-th modality feature based on the second modality feature and the text information;
generating, based on the first modality feature and the (2-1)-th modality feature, at least one piece of second review data from a corresponding dataset comprising a plurality of pieces of first review data; and
generating third review data corresponding to the third image quality assessment data using the augmented language model provided the first modality feature, the (2-1)-th modality feature further comprising a feature of the extracted text information, and the at least one piece of second review data;
wherein preferably the method further comprises:
generating a (2-2)-th modality feature comprising the second modality feature and review text information of the third review data;
generating, based on the first modality feature and the (2-2)-th modality feature, another at least one piece of second image quality assessment data from the dataset; and
generating another third image quality assessment data using the augmented language model provided the first modality feature, the (2-2)-th modality feature, and the other at least one piece of second image quality assessment data.

13. An apparatus, the apparatus comprising:
one or more processors comprising processing circuitry; and
memory comprising one or more storage media storing instructions that, when executed individually or collectively by the one or more processors, cause the apparatus to:
generate a first modality data that corresponds to an image pair that comprise different levels of quality and have related visual information;
generate, based on the first modality data, a first relative quality value corresponding to a plurality of quality indices;
generate second modality data corresponding to a query that is generated based on the first relative quality value;
retrieve, based on the first modality feature and a second modality feature, at least one piece of second image quality assessment data from a dataset comprising a plurality of pieces of first image quality assessment data, where the second modality feature is generated based on the second modality data; and
generate third image quality assessment data corresponding to the image pair by applying the first modality feature, the second modality feature, and the at least one piece of second image quality assessment data to an augmented language model.

14. The apparatus of claim 13, wherein, for the generation of the first relative quality value, the execution of the instructions causes the apparatus to:
for each of a plurality of images comprised in the image pair, generate a quality value corresponding to the plurality of quality indices of a corresponding image; and
generate the first relative quality value based on the quality values and/or wherein, for the generation of the first relative quality value, the execution of the instructions causes the apparatus to:
generate a first quality feature of a corresponding image for each of a plurality of images comprised in the image pair;
generate a second quality feature by fusing the first quality features; and
generate the first relative quality value corresponding to the plurality of quality indices based on the second quality feature.

15. The apparatus of claim 13 or 14,
wherein the execution of the instructions causes the apparatus to generate, based on the first image quality assessment data, first mapping information corresponding to the first modality data and second mapping information corresponding to the second modality data, and
wherein the retrieval of the at least one piece of second image quality assessment data is performed based on the first mapping information and/or the second mapping information;
wherein preferably, for the retrieving of the at least one piece of second image quality assessment data, the execution of the instructions causes the apparatus to retrieve, based on at least one of a similarity between the first modality feature and the first mapping information, a similarity between the first modality feature and the second mapping information, a similarity between the second modality feature and the first mapping information, and/or a similarity between the second modality feature and the second mapping information, the at least one piece of second image quality assessment data from the dataset.
